# EUROPÄISCHE PATENTSCHRIFT

(11) **EP 2 673 156 B1**
(45) Veröffentlichungstag und Bekanntmachung des Hinweises auf die Patenterteilung: **18.02.2015**
(21) Anmeldenummer: 11791458.0
(22) Anmeldetag: 07.12.2011
(51) Int. Cl.: B60K 35/00, G06K 9/00

(54) **VERFAHREN, VORRICHTUNG UND COMPUTERPROGRAMMPRODUKT ZUM ANSTEUERN EINER FUNKTIONSEINHEIT EINES FAHRZEUGS**
METHOD, DEVICE AND COMPUTER PROGRAM PRODUCT FOR CONTROLLING OF A FUNCTIONAL UNIT OF A VEHICLE
MÉTHODE, DISPOSITIF ET UN PRODUIT PROGRAMME D'ORDINATEUR POUR CONTRÔLER UNE UNITÉ FONCTIONNELLE D'UN VÉHICULE

(30) Priorität: 08.02.2011 DE 102011010594
(43) Veröffentlichungstag der Anmeldung: 18.12.2013
(73) Patentinhaber: Daimler AG, 70327 Stuttgart (DE)
(72) Erfinder: HEISTERKAMP, Paul, 89155 Erbach (DE)
(74) Vertreter: JENSEN & SON
(86) Internationale Anmeldenummer: PCT/EP2011/006118
(87) Internationale Veröffentlichungsnummer: WO 2012/107066

(56) Entgegenhaltungen:
- DE-A1-102009 032 069
- US-A1- 2008 236 275
- US-A1- 2009 210 110

## Beschreibung

Die vorliegende Erfindung betrifft ein Verfahren zum Ansteuern einer Funktionseinheit eines Fahrzeugs in Abhängigkeit von einer erfassten Geste eines Fahrzeuginsassen gemäß dem Oberbegriff des Anspruchs 1 sowie eine Vorrichtung und ein Computerprogrammprodukt zum Ausführen des Verfahrens.

Moderne Kraftfahrzeuge verfügen über eine Vielzahl von Bedienelementen, welche zum Beispiel auf dem Armaturenbrett oder in der Mittelkonsole angeordnet sind. Diese Bedienelemente werden zum Ansteuern bzw. Verstellen von Funktionseinheiten des Fahrzeugs, wie zum Beispiel der Fenster, des Schiebedachs und der Außenspiegel verwendet. Diese mehreren Bedienelemente sind einerseits für einen Nutzer bzw. Fahrzeuginsassen verwirrend, andererseits entstehen dadurch für den Fahrzeughersteller hohe Kosten.

Aus der US 2010/0185341 A1 sind ein Verfahren und eine Vorrichtung zum Aktivieren von verschiedenen Fahrzeugzuständen abhängig von einer erfassten Geste bekannt. Ein oder mehrere Räume in einem Fahrzeug werden überwacht. Wird in einem Raum eine vorbestimmte Geste erfasst, wird diese zum Steuern eines Fahrzeugzustands verwendet.

Nachteilig ist, dass derartige Gesten vorbestimmt sind und von dem jeweiligen Nutzer, das heißt in diesem Fall einem Fahrzeuginsassen, vorab erlernt werden müssen. Bei der Gestenerkennung werden üblicher Weise willkürliche, arbiträre Zeichen festgelegt, welche von dem Nutzer ausgeführt werden und von einer Erfassungseinrichtung zu erfassen sind.

Aus jeder der DE 10 2009 032 069 A1 und der US 2009/210110 A1 ist ein Verfahren zum Ansteuern einer Funktionseinheit eines Fahrzeugs, das ein Erfassen einer Geste eines Fahrzeuginsassen und ein Ansteuern einer Funktionseinheit abhängig von der erfassten Geste, falls eine erste vorbestimmte Bedingung erfüllt ist, aufweist. Die erste vorbestimmte Bedingung ist, dass ein Bewegungsablauf einer erfassten Geste mit einem vorbestimmten Bewegungsmuster übereinstimmt, das ähnlich zu einer Bewegung einer anzusteuernden Funktionseinheit oder analog zu einer Manipulation der anzusteuernden Funktionseinheit ist. Ferner sind eine Vorrichtung und ein Computerprogrammprodukt zum Ausführen des Verfahrens bekannt.

Aus der US 2008/236275 A1 sind ein Verfahren gemäß dem Oberbegriff des Anspruchs 1 sowie eine Vorrichtung und ein Computerprogrammprodukt zum Ausführen des Verfahrens bekannt.

Es ist demgemäß die Aufgabe der vorliegenden Erfindung, ein Verfahren und eine Vorrichtung zum Ansteuern mindestens einer Funktionseinheit eines Fahrzeugs und ein betreffendes Computerprogrammprodukt zu schaffen, die ein gestenbasiertes Ansteuern von Funktionseinheiten in einem Fahrzeug auf eine zuverlässige und für einen Nutzer intuitive Weise zulassen.

Hinsichtlich des Verfahrens wird diese Aufgabe mit den in Anspruch 1 angegebenen Maßnahmen, hinsichtlich der Vorrichtung mit den in Anspruch 7 angegebenen Maßnahmen und hinsichtlich des Computerprogrammprodukts mit den in Anspruch 8 angegebenen Maßnahmen gelöst.

Weitere vorteilhafte Ausgestaltungen der vorliegenden Erfindung sind Gegenstand der abhängigen Ansprüche.

Eine Geste ist vorzugsweise eine durch eine Hand oder einen Arm eines Fahrzeuginsassen durchgeführte Geste. Die Gesten können von einem beliebigen Fahrzeuginsassen, von mehreren beliebigen Fahrzuginsassen oder von allen Fahrzeuginsassen durchgeführt werden. Für unterschiedliche Fahrzeuginsassen können unterschiedliche gestenbasierte Bedienmöglichkeiten zugelassen sein. Das Erfassen von Gesten von unterschiedlichen Fahrzeuginsassen kann parallel zueinander oder nacheinander durchgeführt werden.

Durch eine Kombination aus Gestenerkennung, Spracheingabe und Rückmeldung an den Fahrzeuginsassen wird die Genauigkeit der Gestenerkennung durch die Adaption von Parametern erhöht und daher die Gestenerkennung im Laufe der Zeit verbessert.

Die vorliegende Erfindung wird nachstehend anhand von Ausführungsbeispielen unter Bezugnahme auf die beiliegende Zeichnung näher erläutert, in der gleiche oder ähnliche Teile mit gleichen Bezugszeichen bezeichnet sind.

Es zeigt:
Fig. 1 eine schematische Seitenansicht eines Fahrzeugs;
Fig. 2 ein Flussdiagramm eines Verfahrensablaufs gemäß einem ersten Ausführungsbeispiel der vorliegenden Erfindung;
Fig. 3 ein Flussdiagramm eines Verfahrensablaufs gemäß einem zweiten Ausführungsbeispiel der vorliegenden Erfindung; und
Fig. 4 ein Flussdiagramm eines Verfahrensablaufs gemäß einem dritten Ausführungsbeispiel der vorliegenden Erfindung.

Bevor detailliert die Ausführungsbeispiele der vorliegenden Erfindung beschrieben werden, wird ein in allen nachstehend erläuterten Ausführungsbeispielen der vorliegenden Erfindung verwendeter Aufbau beschrieben.

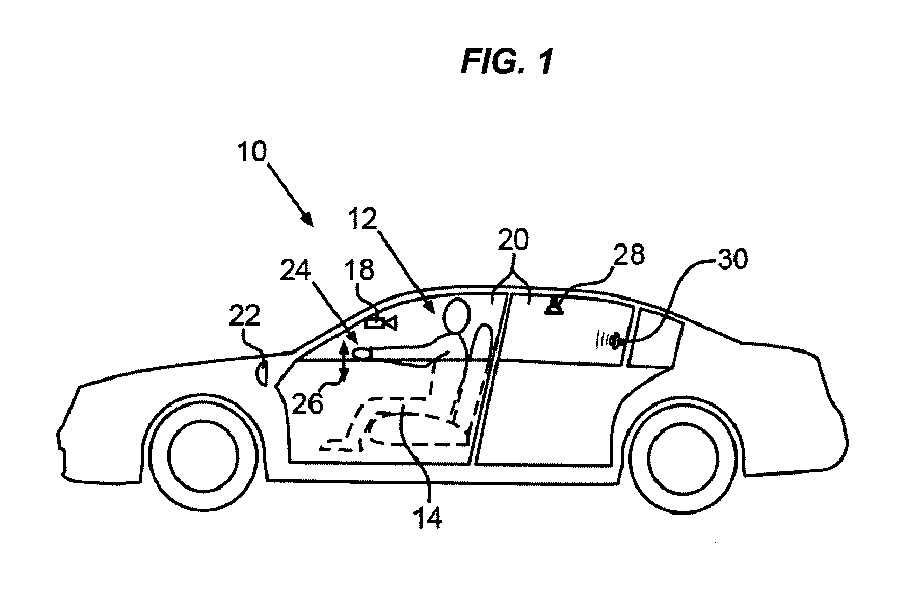

Fig. 1 zeigt eine schematische Seitenansicht eines Fahrzeugs.

In Fig. 1 bezeichnet das Bezugszeichen 10 ein Fahrzeug, bezeichnet das Bezugszeichen 12 einen Innenraum des Fahrzeugs 10, bezeichnet das Bezugszeichen 14 einen Fahrzeuginsassen, bezeichnet das Bezugszeichen 16 einen Fahrersitz des Fahrzeugs 10, bezeichnet das Bezugszeichen 18 eine Erfassungseinrichtung, bezeichnet das Bezugszeichen 20 Fenster des Fahrzeugs 10, bezeichnet das Bezugszeichen 22 Außenspiegel des Fahrzeugs 10, bezeichnet das Bezugszeichen 24 eine Hand des Fahrzeuginsassen 14, bezeichnet das Bezugszeichen 26 einen Bewegungspfeil, der eine mittels der Hand 24 des Fahrzeugsinsassen 14 durchgeführte Geste symbolisiert, bezeichnet das Bezugszeichen 28 ein Mikrofon und bezeichnet das Bezugszeichen 30 einen Lautsprecher.

Wie es in Fig. 1 gezeigt ist, befindet sich der Fahrzeuginsasse 14 auf dem Fahrersitz 16 des Fahrzeugs 10.

In dem Innenraum 12 des Fahrzeugs 10 wird eine Geste des Fahrzeuginsassen 14 erfasst. Das Erfassen der Geste erfolgt über die Erfassungseinrichtung 18. Die Erfassungseinrichtung 18 kann zum Beispiel eine sein, die für Spielkonsolen verwendet wird und ein dreidimensionales Erfassen von Gesten zulässt, oder eine entsprechende Videokamera sein, welche eine Geste des Fahrzeuginsassen 14 erfasst. Die variablen Lichtverhältnisse in dem Innenraum 12 des Fahrzeugs 10 können dadurch ausgeglichen werden, dass das aufgezeichnete Frequenzband mindestens zum Teil in den infraroten Bereich verschoben ist. Hierzu kann gegebenenfalls eine zusätzliche Infrarot-Beleuchtung verwendet werden. Ebenso ist es denkbar, Gesten des Fahrzeuginsassen 14 durch eine entsprechende Bewegungssensorik zu erfassen, oder kapazitive Sensoren einzusetzen, mit welchen Gesten bzw. Bewegungen des Fahrzeuginsassen 14 erfasst werden.

Der Bewegungsablauf einer Geste des Fahrzeuginsassen 14, die zum Ansteuern einer Funktionseinheit dient, stimmt mit einem Bewegungsmuster überein, das ähnlich der Bewegung der anzusteuernden bzw. zu verstellenden Funktionseinheit oder analog zu einer Manipulation der anzusteuernden Funktionseinheit ist. Der Fahrzeuginsasse 14 führt eine sogenannte ikonische Geste aus, welche von der Erfassungseinrichtung 18 erfasst wird. Zu diesem Zweck können entsprechende Bewegungsmuster auf einem Datenspeicher in einer nicht gezeigten Auswerteeinrichtung gespeichert sein. Diese Bewegungsmuster werden zum Beispiel mit Hilfe eines Bildverarbeitungsprogramms mit dem Bewegungsablauf der ausgeführten Geste verglichen.

In Abhängigkeit von einer Geste wird eine Funktionseinheit des Fahrzeugs 10 mit einer hier nicht dargestellten Ansteuer- bzw. Verstelleinrichtung verstellt. Beispiele für eine Funktionseinheit des Fahrzeugs sind die Fenster 20, die Außenspiegel 22, ein hier nicht dargestelltes Schiebedach mit einem Sonnenschutz oder dergleichen. Als Verstelleinrichtung können die bereits in dem Fahrzeug 10 vorhandenen Aktoren verwendet werden, mittels denen die Funktionseinheiten angesteuert bzw. verstellt werden.

Die entsprechende Geste erfolgt zum Beispiel durch die Hand 24 oder den Arm des Fahrzeuginsassen 14. Die Bewegung der Hand 24 ist in der Figur durch einen Bewegungspfeil 26 veranschaulicht. Ebenso kann durch die Bewegung jedes anderen Körperteils des Fahrzeuginsassen 14 eine Geste erzeugt werden.

Nachstehend erfolgt die Beschreibung eines ersten Ausführungsbeispiels der vorliegenden Erfindung.

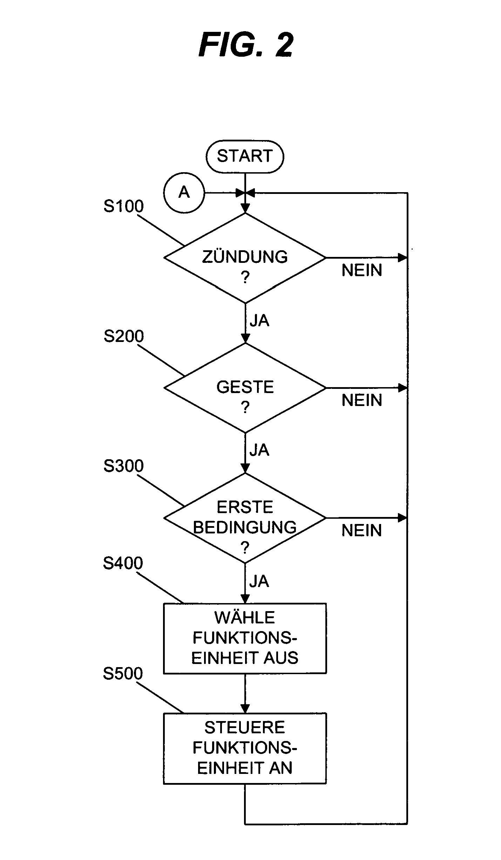

Fig. 2 zeigt ein Flussdiagramm eines Verfahrensablaufs gemäß dem ersten Ausführungsbeispiel der vorliegenden Erfindung.

In einem Schritt S100 wird überprüft, ob eine Zündung des Fahrzeugs 10 eingeschaltet ist oder nicht. Falls die Entscheidung in dem Schritt S100 NEIN ist, kehrt der Verfahrensablauf zu dem Schritt S100 zurück.

Falls die Entscheidung in dem Schritt S100 JA ist, schreitet das Verfahren zu einem Schritt S200 fort, in dem überprüft wird, ob von dem Fahrzeuginsassen 14 eine Geste durchgeführt wird oder nicht. Falls die Entscheidung in dem Schritt S200 NEIN ist, kehrt der Verfahrensablauf zu dem Schritt S100 zurück.

Falls die Entscheidung in dem Schritt S200 JA ist, schreitet der Verfahrensablauf zu dem Schritt S300 fort. In dem Schritt S300 wird überprüft, ob die von dem Fahrzeuginsassen 14 durchgeführte Geste eine erste vorbestimmte Bedingung erfüllt oder nicht. Genauer gesagt ist die erste vorbestimmte Bedingung erfüllt, falls die von dem Fahrzeuginsassen 14 durchgeführte Geste einen Bewegungsablauf aufweist, der mit einem Bewegungsmuster übereinstimmt, das ähnlich zu einer Bewegung einer anzusteuernden Funktionseinheit oder analog zu einer Manipulation der anzusteuernden Funktionseinheit ist. Derartige Bewegungsmuster sind in der zuvor beschriebenen Speichereinrichtung vorab gespeichert und die Entscheidung in dem Schritt S300 wird durch Vergleich des Bewegungsablaufs der von dem Fahrzeuginsassen 14 durchgeführten Geste mit den vorab in der Speichereinrichtung gespeicherten Bewegungsmuster durch die zuvor beschriebene Auswerteeinrichtung durchgeführt.

Falls die Entscheidung in dem Schritt S300 NEIN ist, das heißt die von dem Fahrzeuginsassen 14 durchgeführte Geste weist keinen Bewegungsablauf auf, der mit einem Bewegungsmuster übereinstimmt, das ähnlich zu einer Bewegung einer anzusteuernden Funktionseinheit oder analog zu einer Manipulation der anzusteuernden Funktionseinheit ist, kehrt der Verfahrensablauf zu dem Schritt S100 zurück.

Falls die Entscheidung in dem Schritt S300 JA ist, das heißt die von dem Fahrzeuginsassen 14 durchgeführte Geste weist einen Bewegungsablauf auf, der mit einem Bewegungsmuster übereinstimmt, das ähnlich zu einer Bewegung einer anzusteuernden Funktionseinheit oder analog zu einer Manipulation der anzusteuernden Funktionseinheit ist, schreitet der Verfahrensablauf zu dem Schritt S400 fort.

In dem Schritt S400 wird eine anzusteuernde Funktionseinheit auf der Grundlage der von dem Fahrzeuginsassen 14 durchgeführten Geste ausgewählt. In dem nachfolgenden Schritt S500 wird die in dem Schritt S500 ausgewählte Funktionseinheit angesteuert. Nach dem Schritt S500 kehrt der Verfahrensablauf zu dem Schritt S100 zurück.

Nachfolgend erfolgt die Beschreibung von Beispielen des Ansteuerns von Funktionseinheiten in dem Fahrzeug 10 abhängig von einer von dem Fahrzeuginsassen 14 durchgeführten Geste auf die zuvor bezüglich Fig. 1 beschriebene Weise.

Falls der Fahrzeuginsasse 14 zum Beispiel eines der Fenster 20 öffnen möchte, kann dies dadurch erreicht werden, dass der Fahrzeuginsasse 14 zunächst seinen Arm derart positioniert, dass die ausgestreckte, flache Hand 24 sich ungefähr auf Augenhöhe des Fahrzeuginsassen 14 befindet und die Handfläche nach unten zeigt. Im Anschluss wird durch den Arm eine Abwärtsbewegung ausgeführt. Infolge dieser Abwärtsbewegung wird das Fenster 20 geöffnet. Der Fahrzeuginsasse 14 kann auswählen, ob das Fahrer- oder das Beifahrerfenster geöffnet wird, je nachdem, ob er die Geste mit der dem Fahrerfenster oder der dem Beifahrerfenster zugewandten Hand 24 ausführt.

Ebenso kann durch eine entsprechende Geste das Fenster 20 wieder geschlossen werden. Hierzu kann zum Beispiel mit dem Arm und der flachen, ausgestreckten Hand 24, wobei die Handfläche in diesem Fall nach oben zeigt und sich die Hand 24 ungefähr auf Brusthöhe befindet, eine Aufwärtsbewegung durchführt werden. Wird diese Aufwärtsbewegung des Arms angehalten, wird auch die Bewegung des Fensters 20 gestoppt. Zum Beispiel können die beiden vorderen Fenster 20 des Fahrzeugs 10 dadurch heruntergefahren werden, dass die auf ungefähr Augenhöhe an dem angewinkelten Arm in der Fahrzeugmitte gehaltene, flache Hand 24 nach unten bewegt wird.

Ein nicht dargestelltes Schiebedach und/oder ein Sonnenschutz können zum Beispiel durch eine entsprechende Wischbewegung der flachen, nach oben gestreckten Hand 24, welche eine Bewegung von vorne nach hinten ausführt, geöffnet werden. Durch eine entsprechende Wischbewegung der flachen, nach oben gestreckten Hand 24 von hinten nach vorne kann das Schiebedach wieder geschlossen werden.

Der oder die Außenspiegel 22 des Fahrzeugs 10 können zum Beispiel dadurch eingeklappt werden, dass der Fahrzeuginsasse 14 mit dem Arm und/oder der Hand 24 eine Bewegung ausführt, als ob er die Außenspiegel 22 zu sich heranziehen möchte. Bei einem Bewegungsablauf einer Geste, welche analog zu einem Wegdrücken der Außenspiegel 22 ist, werden die Außenspiegel 22 wieder ausgeklappt. Durch eine Greifbewegung mit Drehen der Hand 24 in horizontaler oder vertikaler Richtung kann der Außenspiegel 22 auf der Seite, zu welcher die Hand 24 gehalten wird, eingestellt werden. Für das Verstellen der Außenspiegel 22 kann zum Beispiel eine alternative Möglichkeit verwendet werden. Diese ist besonders geeignet für Personen, welche mit dem mechanischen Verstellen der Außenspiegel 22 nicht mehr vertraut sind. Es ist vorgesehen, dass der Zeigefinger der Hand 24 eine derartige Bewegung ausführt, als würde er an eine Ecke des Außenspiegels 22 drücken. Infolge dieser Geste wird der Außenspiegel 22 in Richtung dieser Ecke verschwenkt. In diesem Fall weist die Geste eine Analogie zu einer Manipulation der Funktionseinheit auf.

Nachstehend erfolgt die Beschreibung eines zweiten Ausführungsbeispiels der vorliegenden Erfindung.

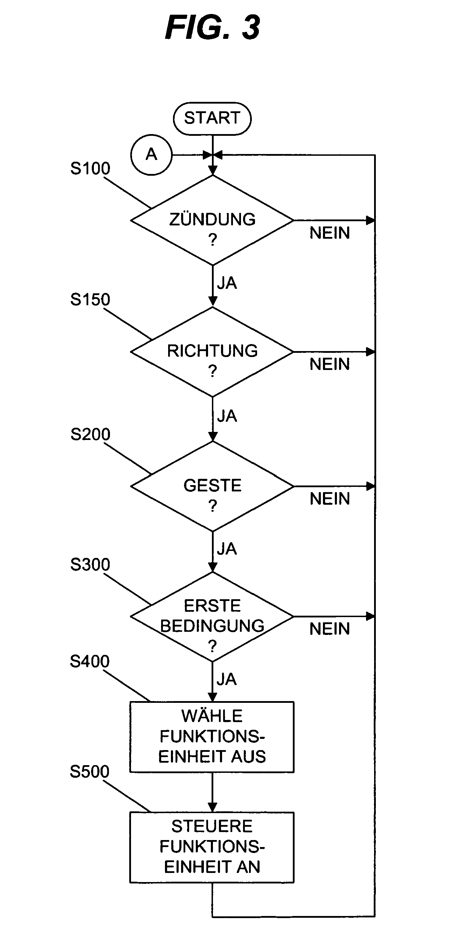

Fig. 3 zeigt ein Flussdiagramm eines Verfahrensablaufs gemäß dem zweiten Ausführungsbeispiel der vorliegenden Erfindung.

Es ist anzumerken, dass das zweite Ausführungsbeispiel der vorliegenden Erfindung ausgenommen der nachstehend beschriebenen Änderungen bezüglich Aufbau und Funktionsweise gleich zu dem zuvor beschriebenen ersten Ausführungsbeispiel der vorliegenden Erfindung ist, so dass eine redundante Beschreibung weggelassen wird.

Wie es in Fig. 3 gezeigt ist, weist der Verfahrensablauf zusätzlich zu dem in Fig. 2 gezeigten Verfahrensablauf einen Schritt S150 auf, der zwischen dem Schritt S100 und dem Schritt S200 durchgeführt wird.

In dem Schritt S150 wird überprüft, ob eine Ausrichtung eines Kopfs des Fahrzeuginsassen 14 und/oder eine Blickrichtung der Augen des Fahrzeuginsassen 14 zum Beispiel eine Richtung zu einer oder mehrerer Funktionseinheiten ist. Falls die Entscheidung in dem Schritt S150 NEIN ist, kehrt der Verfahrensablauf zu dem Schritt S100 zurück. Falls der Verfahrensablauf in dem Schritt S100 JA ist, schreitet der Verfahrensablauf zu dem Schritt S200 fort.

Die Entscheidung in dem Schritt S200 wird ausschließlich hinsichtlich der Funktionseinheit bzw. der Funktionseinheiten durchgeführt, zu der der Kopf des Fahrzeuginsassen 14 ausgerichtet ist und/oder zu der der Blick des Fahrzeuginsassen 14 gerichtet ist.

Auf diese Weise kann die Erkennungssicherheit des Verfahrens erhöht werden. Die Ausrichtung des Kopfs und/oder die Blickrichtung kann mit der Erfassungseinrichtung 18 oder mit einer getrennten Erfassungseinrichtung erfasst werden.

Nachstehend erfolgt die Beschreibung eines dritten Ausführungsbeispiels der vorliegenden Erfindung.

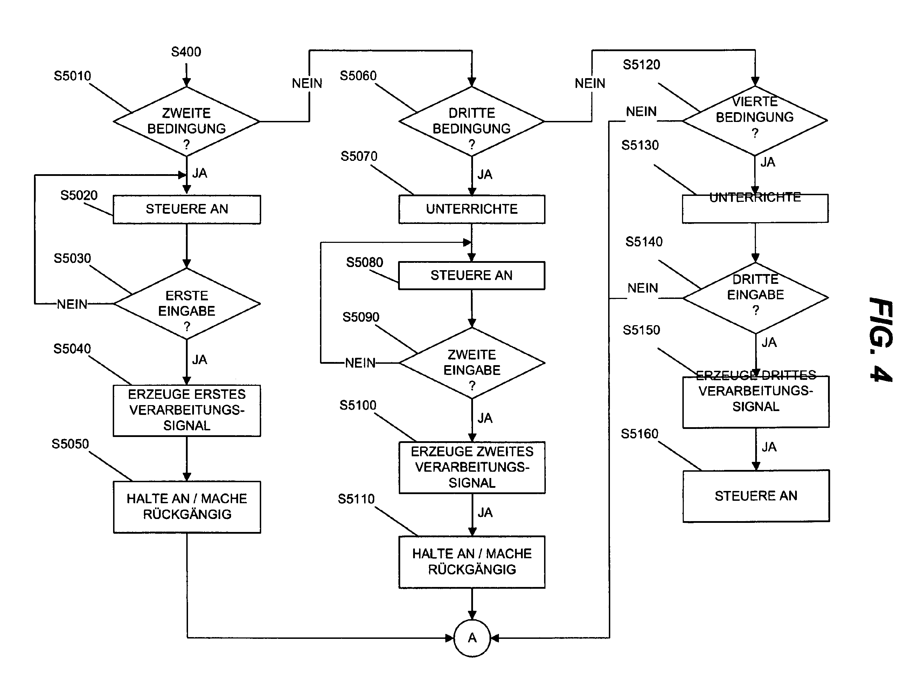

Fig. 4 zeigt ein Flussdiagramm eines Verfahrensablaufs gemäß dem dritten Ausführungsbeispiel der vorliegenden Erfindung.

Es ist anzumerken, dass das dritte Ausführungsbeispiel der vorliegenden Erfindung Ergänzungen sowohl des ersten Ausführungsbeispiels der vorliegenden Erfindung als auch des zweiten Ausführungsbeispiels der vorliegenden Erfindung aufweist und ausgenommen der nachstehend beschriebenen Ergänzungen und/oder Änderungen bezüglich Aufbau und Funktionsweise gleich zu dem zuvor beschriebenen ersten Ausführungsbeispiel der vorliegenden Erfindung bzw. dem zuvor beschriebenen zweiten Ausführungsbeispiel der vorliegenden Erfindung ist, so dass eine redundante Beschreibung weggelassen wird.

Genauer gesagt kann eine entsprechende Funktionseinheit zusätzlich durch ein Sprachsignal des Fahrzeuginsassen 14 ausgewählt werden. Dieses Sprachsignal kann zum Beispiel durch das Mikrofon 28 erfasst werden, welches sich in dem Innenraum 12 des Fahrzeugs 10 befindet. Ebenso kann das Ansteuern bzw. Verstellen einer Funktionseinheit durch ein entsprechendes Sprachsignal gestoppt oder rückgängig gemacht werden. Zu diesem Zweck sind entsprechende Wörter, wie zum Beispiel das Wort "Stop", in der Speichereinrichtung gespeichert. Die entsprechenden Wörter werden mit dem Sprachsignal des Fahrzeuginsassen 14 verglichen.

Die Auswahl der Funktionseinheit des Fahrzeugs 10 kann durch den Fahrzeuginsassen 14 über ein Sprachsignal bestätigt werden.

Der Fahrzeuginsasse 14 kann über die ausgewählte Funktionseinheit unterrichtet werden. Zu diesem Zweck kann zum Beispiel der Lautsprecher 30 verwendet werden, welcher sich in dem Innenraum 12 des Fahrzeugs 10 befindet.

Die zuvor beschriebene Funktionalität wird unter Bezugnahme auf Fig. 4 im Detail beschrieben.

Wie es in Fig. 1 ersichtlich ist, ist der darin gezeigte Verfahrensablauf nach dem Schritt S400 des Verfahrensablaufs in Fig. 2 oder Fig. 3 angeordnet und ersetzt den Schritt S500 des Verfahrensablaufs in Fig. 2 oder Fig. 3. Dies bedeutet, dass nach einem Auswählen einer jeweiligen Funktionseinheit in dem Schritt S400 in Fig. 2 oder Fig. 3 der folgende weitere Verfahrensablauf durchgeführt wird.

In einem Schritt S5010 wird überprüft, ob eine zweite vorbestimmte Bedingung erfüllt ist oder nicht. Genauer gesagt ist die zweite vorbestimmte Bedingung erfüllt, falls eine Erkennungssicherheit der in dem Schritt S200 in Fig. 2 oder Fig. 3 erfassten Geste über einem ersten vorbestimmten Schwellwert ist. Dieser erste vorbestimmte Schwellwert ist derart festgelegt, dass eine sich über diesem befindende Erkennungssicherheit angibt, dass eine Geste äußerst sicher bzw. zuverlässig erkannt worden ist. Unter Erkennen ist zu verstehen, dass eine Geste erfasst wird, mit den in der Speichereinrichtung gespeicherten Bewegungsmustern verglichen wird und ein das Vergleichsergebnis anzeigendes Verarbeitungsergebnis ausgegeben wird.

Falls eine Entscheidung in dem Schritt S5010 JA ist, das heißt die Erkennungssicherheit der erfassten Geste derart hoch ist, dass von einem richtigen Erkennen der Geste auszugehen ist, schreitet der Verfahrensablauf zu einem Schritt S5020 fort. In dem Schritt S5020 wird die jeweilige ausgewählte Funktionseinheit angesteuert. Das heißt, der Schritt S5020 entspricht dem Schritt S500 in dem Verfahrensablauf in Fig. 2 oder Fig. 3. Nach dem Schritt S5020 wird ein Schritt S5030 durchgeführt, in dem überprüft wird, ob von dm Fahrzeuginsassen 14 zum Beispiel durch das Mikrofon 28 eine erste vorbestimmte Spracheingabe durchgeführt worden ist oder nicht. Diese erste vorbestimmte Spracheingabe ist eine Spracheingabe, wie zum Beispiel "Stop", die dazu dient, das Ansteuern der in dem Schritt S5020 angesteuerten Funktionseinheit anzuhalten oder rückgängig zu machen. Falls eine Entscheidung in dem Schritt S5030 NEIN ist, kehrt der Verfahrensablauf zu dem Schritt S5020 zurück. Das heißt, das Ansteuern der angesteuerten Funktionseinheit wird fortgesetzt.

Falls die Entscheidung in dem Schritt S5030 JA ist, schreitet der Verfahrensablauf zu einem Schritt S5040 fort. In dem Schritt S5040 wird als Reaktion auf die erste vorbestimmte Spracheingabe ein erstes vorbestimmtes Verarbeitungssignal erzeugt, das dazu dient, ein Anhalten oder rückgängig Machen des Ansteuerns der angesteuerten Funktionseinheit anzuzeigen. Nach dem Schritt S5040 wird ein Schritt S5050 durchgeführt. In dem Schritt S5050 wird die angesteuerte Funktionseinheit auf der Grundlage des ersten vorbestimmten Verarbeitungssignals angesteuert, um das zuvor durchgeführte Ansteuern der Funktionseinheit anzuhalten bzw. rückgängig zu machen. Nach dem Schritt S5050 kehrt der Verfahrensablauf zu dem Einsprungpunkt A des Verfahrensablaufs in Fig. 2 oder Fig. 3 zurück.

Falls in dem Schritt S5010 eine Entscheidung NEIN durchgeführt wird, schreitet der Verfahrensablauf zu einem Schritt S5060 fort. In dem Schritt S5060 wird überprüft, ob eine dritte vorbestimmte Bedingung erfüllt ist oder nicht.

Genauer gesagt ist die dritte vorbestimmte Bedingung erfüllt, falls eine Erkennungssicherheit der in dem Schritt S200 in Fig. 2 oder Fig. 3 erfassten Geste unter dem ersten vorbestimmten Schwellwert und über einem zweiten vorbestimmten Schwellwert ist, der kleiner als der erste vorbestimmte Schwellwert ist. Dieser zweite vorbestimmte Schwellwert ist derart festgelegt, dass eine sich über diesem befindende Erkennungssicherheit angibt, dass eine Geste mit einer großen Wahrscheinlichkeit erkannt worden ist, die Erkennungssicherheit jedoch unter der Erkennungssicherheit ist, die durch Überschreiten des ersten vorbestimmten Schwellwerts gegeben ist. Unter Erkennen ist zu verstehen, dass eine Geste erfasst wird, mit den in der Speichereinrichtung gespeicherten Bewegungsmustern verglichen wird und ein das Vergleichsergebnis anzeigendes Verarbeitungsergebnis ausgegeben wird.

Falls eine Entscheidung in dem Schritt S5060 JA ist, das heißt die Erkennungssicherheit der erfassten Geste derart hoch ist, dass von einem äußerst wahrscheinlichen Erkennen der Geste auszugehen ist, schreitet der Verfahrensablauf zu einem Schritt S5070 fort. In dem Schritt S5070 wird der Fahrzeuginsasse 14 über das Ansteuern der ausgewählten Funktionseinheit unterrichtet, bevor die ausgewählte Funktionseinheit angesteuert wird. Genauer gesagt wird der Fahrzeuginsasse 14 mit einem zeitlichen Vorlauf vor einem Ansteuern der ausgewählten Funktionseinheit über die ausgewählte Funktionseinheit unterrichtet, die nachfolgend anzusteuern ist.

Nach dem Schritt S5070 wird ein Schritt S5080 durchgeführt. In dem Schritt S5080 wird die jeweilige ausgewählte Funktionseinheit nach dem zeitlichen Vorlauf des Schritts S5070 angesteuert. Das heißt, der Schritt S5080 entspricht dem Schritt S500 in dem Verfahrensablauf in Fig. 2 oder Fig. 3. Nach dem Schritt S5080 wird ein Schritt S5090 durchgeführt, in dem überprüft wird, ob von dem Fahrzeuginsassen 14 zum Beispiel durch das Mikrofon 28 eine zweite vorbestimmte Spracheingabe durchgeführt worden ist oder nicht. Diese zweite vorbestimmte Spracheingabe ist eine Spracheingabe, wie zum Beispiel "Stop", die dazu dient, das Ansteuern der in dem Schritt S5080 angesteuerten Funktionseinheit anzuhalten oder rückgängig zu machen. Falls eine Entscheidung in dem Schritt S5090 NEIN ist, kehrt der Verfahrensablauf zu dem Schritt S5080 zurück. Das heißt, das Ansteuern der angesteuerten Funktionseinheit wird fortgesetzt.

Falls die Entscheidung in dem Schritt S5090 JA ist, schreitet der Verfahrensablauf zu einem Schritt S5100 fort. In dem Schritt S5100 wird als Reaktion auf die zweite vorbestimmte Spracheingabe ein zweites vorbestimmtes Verarbeitungssignal erzeugt, das dazu dient, ein Anhalten oder rückgängig Machen des Ansteuerns der angesteuerten Funktionseinheit anzuzeigen. Nach dem Schritt S5100 wird ein Schritt S5110 durchgeführt. In dem Schritt S5110 wird die angesteuerte Funktionseinheit auf der Grundlage des zweiten vorbestimmten Verarbeitungssignals angesteuert, um das zuvor durchgeführte Ansteuern der Funktionseinheit anzuhalten bzw. rückgängig zu machen.

Nach dem Schritt S5110 kehrt der Verfahrensablauf zu dem Einsprungpunkt A des Verfahrensablaufs in Fig. 2 oder Fig. 3 zurück.

Falls in dem Schritt S5060 eine Entscheidung NEIN durchgeführt wird, schreitet der Verfahrensablauf zu einem Schritt S5120 fort. In dem Schritt S5120 wird überprüft, ob eine vierte vorbestimmte Bedingung erfüllt ist oder nicht.

Genauer gesagt ist die vierte vorbestimmte Bedingung erfüllt, falls eine Erkennungssicherheit der in dem Schritt S200 in Fig. 2 oder Fig. 3 erfassten Geste gleich oder unter einem dritten vorbestimmten Schwellwert ist. Dieser dritte vorbestimmte Schwellwert ist derart festgelegt, dass eine sich über diesem befindende Erkennungssicherheit angibt, dass eine Geste mit einer Wahrscheinlichkeit erkannt worden ist, die Erkennungssicherheit jedoch unter der Erkennungssicherheit ist, die durch Überschreiten des zweiten vorbestimmten Schwellwerts gegeben ist. Unter Erkennen ist zu verstehen, dass eine Geste erfasst wird, mit den in der Speichereinrichtung gespeicherten Bewegungsmustern verglichen wird und ein das Vergleichsergebnis anzeigendes Verarbeitungsergebnis ausgegeben wird.

Falls eine Entscheidung in dem Schritt S5120 JA ist, das heißt die Erkennungssicherheit der erfassten Geste derart hoch ist, dass von einem wahrscheinlichen Erkennen der Geste auszugehen ist, schreitet der Verfahrensablauf zu einem Schritt S5130 fort. In dem Schritt S5130 wird der Fahrzeuginsasse 14 dahingehend unterrichtet, dass angefragt wird, ob er die ausgewählte Funktionseinheit anzusteuern wünscht, ohne das die ausgewählte Funktionseinheit angesteuert wird. Nach dem Schritt S5130 wird ein Schritt S5140 durchgeführt, in dem überprüft wird, ob von dem Fahrzeuginsassen 14 zum Beispiel durch das Mikrofon 28 eine dritte vorbestimmte Spracheingabe durchgeführt worden ist oder nicht. Diese dritte vorbestimmte Spracheingabe ist eine Spracheingabe, wie zum Beispiel "Steuere an", die dazu dient, das Ansteuern der in dem Schritt S400 des Verfahrensablaufs in Fig. 2 oder Fig. 3 ausgewählten Funktionseinheit durchzuführen. Falls eine Entscheidung in dem Schritt S5140 NEIN ist, kehrt der Verfahrensablauf zu dem Einsprungpunkt A des Verfahrensablaufs in Fig. 2 oder Fig. 3 zurück. Das heißt, das Ansteuern der angesteuerten Funktionseinheit wird nicht durchgeführt.

Falls die Entscheidung in dem Schritt S5140 JA ist, schreitet der Verfahrensablauf zu einem Schritt S5150 fort. In dem Schritt S5150 wird als Reaktion auf die dritte vorbestimmte Spracheingabe ein drittes vorbestimmtes Verarbeitungssignal erzeugt, das dazu dient, ein Ansteuern der ausgewählten Funktionseinheit anzuzeigen. Nach dem Schritt S5150 wird ein Schritt S5160 durchgeführt. In dem Schritt S5160 wird die ausgewählte Funktionseinheit auf der Grundlage des dritten vorbestimmten Verarbeitungssignals angesteuert. Das heißt, der Schritt S5160 entspricht dem Schritt S500 in dem Verfahrensablauf in Fig. 2 oder Fig. 3.

Nach dem Schritt S5160 kehrt der Verfahrensablauf zu dem Einsprungpunkt A des Verfahrensablaufs in Fig. 2 oder Fig. 3 zurück.

Auf die zuvor unter Bezugnahme auf Fig. 4 beschriebene Weise kann eine jeweils ausgewählte Funktionseinheit ohne weiteres Einwirken des Fahrzeuginsassen angesteuert werden, falls eine Erkennungssicherheit einer erfassten Geste äußerst hoch ist, kann die jeweils ausgewählte Funktionseinheit angesteuert werden, wobei der Fahrzeuginsasse 14 das Ansteuern anhalten oder rückgängig machen kann, falls eine Erkennungssicherheit der erfassten Geste ein äußerst wahrscheinlich richtiges Erkennen der erfassten Geste anzeigt, und kann die jeweils ausgewählte Funktionseinheit angesteuert werden, nachdem der Fahrzeuginsasse 14 das Ansteuern der ausgewählten Funktionseinheit bestätigt hat, falls eine Erkennungssicherheit der erfassten Geste keine ausreichend hohe Wahrscheinlichkeit anzeigt.

Es ist anzumerken, dass in den Schritten S500, S5020, S5080 und S5160 das Ansteuern solange durchgeführt wird, bis die angesteuerte Funktionseinheit ihre Funktion vollständig durchgeführt hat und/oder bis eine erfasste Geste nicht mehr von dem Fahrzeuginsassen 14 durchgeführt wird, außer die Bedingung eines der Schritte S5030 und S5090 ist erfüllt. Obgleich es in Fig. 4 nicht gezeigt ist, kehrt der Verfahrensablauf nach dem vollständigen Durchführen der Funktion der angesteuerten Funktionseinheit und/oder nachdem die erfasste Geste nicht mehr von dem Fahrzeuginsassen 14 durchgeführt wird, zu dem Einsprungspunkt A in Fig. 2 oder Fig. 3 zurück.

Vorteilhaft kann der Verfahrensablauf der Schritte S5130 und S5140 verwendet werden, um ein überwachtes Lernen durchzuführen, bei dem eine Erkennungssicherheit des Erkennens von Gesten durch Anpassen jeweiliger Parameter bei dem Überprüfen, ob die zweite, dritte oder vierte Bedingung erfüllt ist oder nicht, verbessert wird.

Weiterhin oder alternativ kann das Erkennen und Verarbeiten der Gesten nicht nur für einen Fahrer, sondern ebenso für andere oder alle Fahrzeuginsassen in dem Fahrzeug 10 durchgeführt werden, wodurch nicht nur Bedienelemente für den Fahrer, sondern ebenso Bedienelemente für die anderen oder alle Fahrzeuginsassen in dem Fahrzeug weggelassen werden können.

Es besteht die Möglichkeit, mehrere der zuvor bezüglich der Fig. 2, Fig. 3 und Fig. 4 beschriebenen Verfahrensabläufe parallel zueinander durchzuführen, um eine Parallelverarbeitung mehrerer gleichzeitig durchgeführter Gesten zuzulassen, die gegebenenfalls von einem Fahrzeuginsassen oder unterschiedlichen Fahrzeuginsassen durchgeführt werden.

Es ist anzumerken, dass der in Fig. 1 gezeigte Aufbau der Erfassungseinrichtung 18, des Mikrofons 28 und des Lautsprechers 30 frei wählbar sind und lediglich der Veranschaulichung dienen. Die Erfassungseinrichtung 18 ist vorzugsweise derart anzuordnen, dass sie Gesten von Fahrzeuginsassen 14 auf allen Sitzplätzen eines Fahrzeugs 10 erfassen kann. Zu diesem Zweck können gegebenenfalls auch mehrere Erfassungseinrichtungen 18 verwendet werden. Das Mikrofon 28 oder eine Mehrzahl von Mikrofonen müssen derart in dem Innenraum 12 des Fahrzeugs 10 angeordnet sein, dass sie die Sprachsignale bzw. Spracheingabe des Fahrzeuginsassen 14 oder von mehreren Fahrzeuginsassen 14 getrennt voneinander erfassen können.

Als Beispiel eines gestenbasierten Ansteuerns durch die vorhergehenden Verfahrensabläufe kann ein Fenster eines Fahrzeugs dadurch geöffnet werden, dass mit der ausgestreckten, flachen Hand des Fahrzeuginsassen eine Abwärtsbewegung ausgeführt wird. Der Bewegungsablauf der Geste weist in diesem Fall eine Ähnlichkeit zu der Bewegung eines sich öffnenden Fensters auf. Eine andere Möglichkeit besteht darin, dass die Geste analog zu einer direkten Manipulation der gewünschten Funktionseinheit ist. Zum Beispiel kann der Außenspiegel eines Fahrzeugs dadurch verstellt werden, dass der ausgestreckte Zeigefinger derart in Richtung einer Ecke des Außenspiegels bewegt wird, als würde der Außenspiegel selbst mechanisch mit dem Finger verstellen werden. Durch diese Geste wird der Außenspiegel in Richtung der Ecke verschwenkt.

Eine derartige Klasse von Gesten, die eine Ähnlichkeitsbeziehung zu der Aktion haben, welche durch die Geste auszuführen ist bzw. die analog zu einer direkten Manipulation des Objekts sind, wird als "ikonische" Gesten bezeichnet. Ikonische Gesten bieten den Vorteil, dass sie in der Regel nicht aufwendig von dem Fahrzeuginsassen zu erlernen sind, sondern sich intuitiv ergeben.

In dem Innenraum des Fahrzeugs ist eine im Wesentlichen stabile und kontrollierte Umgebung gegeben. Die Position des Fahrzeuginsassen ist nur in vorbestimmten Grenzen änderbar und die Reichweite der Bewegungen und somit der Raum, in dem die Gesten erfassbar sind, ist ebenso beschränkt. Durch diese Beschränkungen sind die Gesten zuverlässiger erfassbar.

Zum Erfassen der Gesten des Fahrzeuginsassen sind zum Beispiel bekannte Sensoren oder Erfassungseinrichtungen verwendbar, wie sie in Consumer- oder Gamer-Produkten verwendet werden. daher kann die Anzahl der Bedienelemente in einem Fahrzeug deutlich verringert werden und kann die Bedienung für Fahrzeuginsassen erleichtert werden. Es sind sowohl Gesten des Fahrers als auch die von anderen Fahrzeuginsassen, welche sich auf dem Beifahrersitz und/oder den Rücksitzen befinden, erfassbar.

Es ist anzumerken, dass anstelle der in jedem der zuvor beschriebenen Ausführungsbeispiele verwendeten Geste, die einen Bewegungsablauf aufweist, der mit einem Bewegungsmuster übereinstimmt, das ähnlich zu einer Bewegung einer anzusteuernden Funktionseinheit oder analog zu einer Manipulation der anzusteuernden Funktionseinheit ist, ebenso eine Geste, die auf eine anzusteuernde Funktionseinheit weist, zusammen mit einer ggf. redundanten Sprachanweisung verwendet werden kann, die dazu dient eine Funktion der anzusteuernden Funktionseinheit auszuwählen. Diese kann auch zusätzlich zu der Funktionalität in jedem der zuvor beschriebenen Ausführungsbeispiele angewendet werden. Ein Beispiel hierfür ist ein Zeigen auf den Außenspiegel und ein Eingeben der Sprachanweisung "Heranklappen", um den Außenspiegel derart anzusteuern, dass er herangeklappt wird.

Die zuvor beschriebenen Ausführungsbeispiele der vorliegenden Erfindung sind als Computerprogrammprodukt, wie zum Beispiel ein Speichermedium, realisierbar, das dazu ausgelegt ist, im Zusammenwirken mit einem Computer oder mehreren Computern, das heißt Computersystemen oder Computernetzen, oder sonstigen Recheneinheiten ein Verfahren gemäß den vorhergehenden Ausführungsbeispielen auszuführen. Das Computerprogrammprodukt kann dazu ausgelegt sein, dass das Verfahren erst nach Durchführen einer vorbestimmten Routine, wie zum Beispiel einer Setup-Routine, ausgeführt wird.

Obgleich die vorliegende Erfindung vorhergehend anhand von Ausführungsbeispielen beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verweisen.

## Patentansprüche

1. Verfahren zum Ansteuern einer Funktionseinheit eines Fahrzeugs (10), das aufweist:
Erfassen einer Geste eines Fahrzeuginsassen (14);
Ansteuern einer Funktionseinheit abhängig von der erfassten Geste, falls eine erste vorbestimmte Bedingung erfüllt ist, wobei die erste vorbestimmte Bedingung ist, dass ein Bewegungsablauf einer erfassten Geste mit einem vorbestimmten Bewegungsmuster übereinstimmt, das ähnlich zu einer Bewegung einer anzusteuernden Funktionseinheit oder analog zu einer Manipulation der anzusteuernden Funktionseinheit ist, **gekennzeichnet durch**
Erzeugen eines ersten vorbestimmten Verarbeitungssignals als Reaktion auf eine erste vorbestimmte Spracheingabe eines Fahrzeuginsassen, falls eine zweite vorbestimmte Bedingung erfüllt ist; und
Anhalten oder rückgängig Machen des Ansteuerns der anzusteuernden Funktionseinheit als Reaktion auf das erste vorbestimmte Verarbeitungssignal,
wobei
die zweite vorbestimmte Bedingung ist, dass eine Erkennungssicherheit der erfassten Geste über einem ersten vorbestimmten Schwellwert ist.

2. Verfahren nach Anspruch 1, **gekennzeichnet durch** Auswählen einer anzusteuernden Funktionseinheit vor dem Ansteuern der anzusteuernden Funktionseinheit **durch** Erfassen einer Ausrichtung eines Kopfs des Fahrzeuginsassen (14) oder einer Blickrichtung des Fahrzeuginsassen (14).

3. Verfahren nach Anspruch 1 oder 2, **gekennzeichnet durch**:
Unterrichten des Fahrzeuginsassen (14) über eine anzusteuernde Funktionseinheit nach einem Auswählen und vor dem Ansteuern der anzusteuernden Funktionseinheit, falls eine dritte vorbestimmte Bedingung erfüllt ist;
Erzeugen eines zweiten vorbestimmten Verarbeitungssignals als Reaktion auf eine zweite vorbestimmte Spracheingabe eines Fahrzeuginsassen nach dem Unterrichten des Fahrzeuginsassen (14); und Anhalten oder rückgängig Machen des Ansteuerns der anzusteuernden Funktionseinheit als Reaktion auf das zweite vorbestimmte Verarbeitungssignal.

4. Verfahren nach Anspruch 3, **dadurch gekennzeichnet, dass** die dritte vorbestimmte Bedingung ist, dass die Erkennungssicherheit der erfassten Geste unter dem ersten vorbestimmten Schwellwert und über einem zweiten vorbestimmten Schwellwert ist, der kleiner als der erste vorbestimmte Schwellwert ist.

5. Verfahren nach Anspruch 3 oder 4, **gekennzeichnet durch**:
Unterrichten des Fahrzeuginsassen (14) über eine anzusteuernde Funktionseinheit nach einem Auswählen und vor dem Ansteuern der anzusteuernden Funktionseinheit, falls eine vierte vorbestimmte Bedingung erfüllt ist;
Erzeugen eines dritten vorbestimmten Verarbeitungssignals als Reaktion auf eine dritte vorbestimmte Spracheingabe eines Fahrzeuginsassen nach dem Unterrichten des Fahrzeuginsassen (14); und Ausführen des Ansteuerns der anzusteuernden Funktionseinheit als Reaktion auf das dritte vorbestimmte Verarbeitungssignal.

6. Verfahren nach Anspruch 5, **dadurch gekennzeichnet, dass** die vierte vorbestimmte Bedingung ist, dass eine Erkennungssicherheit der erfassten Geste unter einem dritten vorbestimmten Schwellwert ist, der kleiner oder gleich dem zweiten vorbestimmten Schwellwert ist.

7. Vorrichtung zum Ansteuern einer Funktionseinheit eines Fahrzeugs (10), die Einrichtungen aufweist, die dazu ausgelegt sind, ein Verfahren nach einem der Ansprüche 1 bis 6 auszuführen.

8. Computerprogrammprodukt, das dazu ausgelegt ist, im Zusammenwirken mit einem Computer oder einem Computernetz direkt oder, nach Durchführen einer vorbestimmten Routine, indirekt ein Verfahren nach einem der Ansprüche 1 bis 6 auszuführen.

## Claims

1. Method for controlling a functional unit of a vehicle (10), comprising:
the detection of a gesture of a vehicle occupant (14);
the control of a functional unit in response to the detected gesture if a first predetermined condition is met, the first predetermined condition being that a movement sequence of a detected gesture corresponds to a predetermined movement pattern which is similar to a movement of a functional unit to be controlled or analogous to a manipulation of the functional unit to be controlled,
**characterised by**
the generation of a first predetermined processing signal in response to a first predetermined voice input of a vehicle occupant if a second predetermined condition is met; and
the stopping or cancellation of the control of the functional unit to be controlled in response to the first predetermined processing signal,
wherein the second predetermined condition is that a recognition certainty of the detected gesture exceeds a first predetermined threshold value.

2. Method according to claim 1, **characterised by** the selection of a functional unit to be controlled before the control of the functional unit to be controlled by detecting an orientation of a head of the vehicle occupant (14) of a line of vision of the vehicle occupant (14).

3. Method according to claim 1 or 2, **characterised by**:
the informing of the vehicle occupant (14) about a functional unit to be controlled after a selection and before a control of the functional unit to be controlled if a third predetermined condition is met;
the generation of a second predetermined processing signal in response to a second predetermined voice input of a vehicle occupant after the vehicle occupant (14) has been informed; and the stopping or cancellation of the control of the functional unit to be controlled in response to the second predetermined processing signal.

4. Method according to claim 3, **characterised in that** the third predetermined condition is that the recognition certainty of the detected gesture is below the first predetermined threshold value and exceeds a second predetermined threshold value which is lower than the first predetermined threshold value.

5. Method according to claim 3 or 4, **characterised by**:
the informing of the vehicle occupant (14) about a functional unit to be controlled after a selection and before the control of the functional unit to be controlled if a fourth predetermined condition is met;
the generation of a third predetermined processing signal in response to a third predetermined voice input of a vehicle occupant after the vehicle occupant (14) has been informed; and the execution of the control of the functional unit to be controlled in response to the third predetermined processing signal.

6. Method according to claim 5, **characterised in that** the fourth predetermined condition is that a recognition certainty of the detected gesture is below a third predetermined threshold value which is lower than or equal to the second predetermined threshold value.

7. Device for controlling a functional unit of a vehicle (10), which functional unit comprises devices designed for the execution of a method according to any of claims 1 to 6.

8. Computer programme product designed for executing, while acting together with a computer or a computer network, directly or, following the execution of a predetermined routine, indirectly a method according to any of claims 1 to 6.

## Revendications

1. Procédé de commande d'une unité fonctionnelle d'un véhicule automobile (10) qui consiste à :
détecter un geste d'un occupant (14) de véhicule automobile ; commander une unité fonctionnelle en fonction du geste détecté, dans le cas où une première condition prédéfinie soit remplie, la première condition prédéfinie étant qu'une trajectoire de déplacement d'un geste détecté corresponde à un modèle de mouvement prédéfini, qui est similaire à un mouvement d'une unité fonctionnelle à commander ou analogue à une manipulation de l'unité fonctionnelle à commander, **caractérisé par** la production d'un premier signal de traitement prédéfini en tant que réaction à une première saisie vocale prédéfinie d'un occupant de véhicule automobile, dans le cas où une deuxième condition prédéfinie soit remplie ; et arrêter ou annuler la commande de l'unité fonctionnelle à commander en tant que réaction au premier signal de traitement prédéfini, la deuxième condition prédéfinie étant qu'une sécurité de reconnaissance du geste détecté soit supérieure à la première valeur seuil prédéfinie.

2. Procédé selon la revendication 1, **caractérisé par** la sélection d'une unité fonctionnelle à commander avant la commande de l'unité fonctionnelle à commander par détection d'un alignement d'une tête d'un occupant (14) de véhicule automobile ou de la direction du regard de l'occupant (14) de véhicule automobile.

3. Procédé selon la revendication 1 ou la revendication 2, **caractérisé par** :
avertir l'occupant (14) du véhicule automobile d'une unité fonctionnelle à commander après une sélection et avant la commande de l'unité fonctionnelle à commande, au cas où une troisième condition prédéfinie soit remplie ; produire un second signal de traitement prédéfini en tant que réaction à une deuxième saisie vocale prédéfinie d'un occupant de véhicule automobile après avoir avertir l'occupant du véhicule automobile (14) ; et arrêter ou annuler la commande de l'unité fonctionnelle en tant que réaction au deuxième signal de traitement prédéfini.

4. Procédé selon la revendication 3, **caractérisé en ce que** la troisième condition prédéfinie est que la sécurité de reconnaissance du geste détecté soit inférieure à la première valeur seuil prédéfinie et supérieure à une deuxième valeur seuil prédéfinie, qui est inférieure à la première valeur seuil prédéfinie.

5. Procédé selon la revendication 3 ou la revendication 4, **caractérisé par** : avertir l'occupant (14) du véhicule automobile d'une unité fonctionnelle à commander après une sélection et avant la commande de l'unité fonctionnelle à commande, au cas où une quatrième condition prédéfinie soit remplie ; produire un troisième signal de traitement prédéfini en tant que réaction à une troisième saisie vocale prédéfinie d'un occupant de véhicule automobile après avoir avertir l'occupant (14) du véhicule automobile ; et exécuter la commande de l'unité fonctionnelle en tant que réaction au troisième signal de traitement prédéfini.

6. Procédé selon la revendication 5, **caractérisé en ce que** la quatrième condition prédéfinie est que la sécurité de reconnaissance du geste détecté soit inférieure à la troisième valeur seuil prédéfinie, qui est inférieure ou égale à la deuxième valeur seuil prédéfinie.

7. Dispositif destiné à commander une unité fonctionnelle d'un véhicule automobile (10), comportant les dispositifs qui sont destinés à exécuter un procédé selon les revendications 1 à 6.

8. Produit-programme informatique conçu à interagir avec un ordinateur ou un réseau d'ordinateur afin d'exécuter directement ou, après exécution d'une routine prédéfinie, indirectement un procédé selon l'une quelconque des revendications 1 à 6.
